# EUROPEAN PATENT APPLICATION

(11) **EP 2 669 894 A1**
(43) Date of publication of application: **04.12.2013**
(21) Application number: 13169773.2
(22) Date of filing: 29.05.2013
(51) Int. Cl.: G11B 27/10, G11B 27/28, G06T 7/40

(54) **Method for creating thumbnail images of videos and an electronic device for display thereof**

(30) Priority: 31.05.2012 KR 20120058135
(71) Applicant: Samsung Electronics Co., Ltd, Gyeonggi-do 443-742 (KR)
(72) Inventor: Im, Byung-Jai, Seoul (KR)
(74) Representative: Nederlandsch Octrooibureau

(57) **Abstract**

Method and apparatus for creating a thumbnail image of a video in an electronic device are provided. The method for creating the video thumbnail image in the electronic device includes detecting a plurality of images in a video; selecting at least one image by considering a color attribute of the images; and displaying the at least one image as a thumbnail image of the video.

## Description

### TECHNICAL FIELD

The present disclosure relates generally to a method for creating a thumbnail image of a video and an electronic device for display thereof.

### BACKGROUND

In accordance with advances of multimedia technologies, multimedia contents are used increasingly. Recently, as an electronic device can transmit and receive massive data at a high speed, massive visual contents such as video data are used more in the electronic device. Hence, the electronic device requires a method for easily managing the multimedia contents.

As discussed above, as the use of the multimedia contents increases, the electronic device shows an identifier for identifying the multimedia contents in addition to a file name, so that an electronic device user can identify the multimedia contents. For example, the electronic device provides a first image of the video using a thumbnail image. The electronic device can provide an image apart from the start of the video by a reference section, using the thumbnail image.

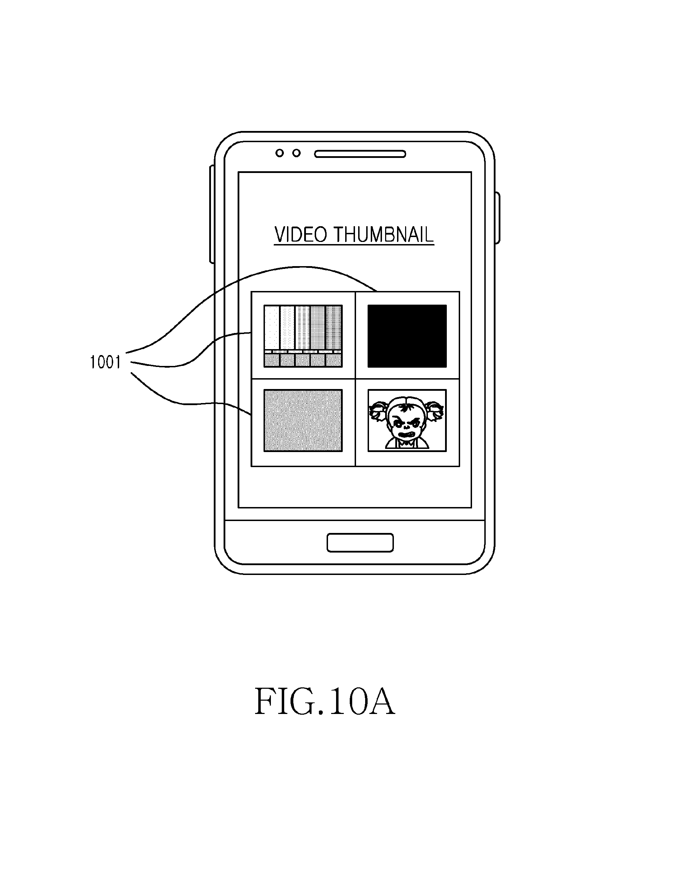

When the electronic device provides the image of the fixed point of the video as the thumbnail image, images 1001 cannot identify the videos as shown in FIG. 10A. In this regard, the electronic device requires a method allowing the user to easily identify the videos.

### SUMMARY

To address the above-discussed deficiencies, it is a primary object of the present disclosure to provide an apparatus and a method for creating a thumbnail images of a video by considering a color attribute in an electronic device.

An embodiment of the present disclosure provides an apparatus and a method for creating a thumbnail image of a video with any one of a plurality of images detected from the videos in an electronic device.

Another embodiment of the present disclosure provides an apparatus and a method for creating a thumbnail image of a video using a standard deviation of brightness in an electronic device.

Yet another embodiment of the present disclosure provides an apparatus and a method for creating a thumbnail image of a video using a standard deviation of color in an electronic device.

Still another embodiment of the present disclosure provides an apparatus and a method for creating a thumbnail image of a video with an image of an average color which is most similar to a particular color in an electronic device.

A further embodiment of the present disclosure provides an apparatus and a method for creating a thumbnail image of a video with an image of the highest composition rate of a particular color of the image in an electronic device.

According to one embodiment of the present disclosure, a method for creating a thumbnail image of a video includes detecting a plurality of images in a video; selecting at least one image by considering a color attribute of the images; and displaying the at least one image as a thumbnail image of the video.

According to another embodiment of the present disclosure, a method for creating a thumbnail image of a video includes detecting a first image in a video; determining whether the first image is suitable for a thumbnail image by considering a color attribute of the first image; and when the first image is suitable for the thumbnail image, displaying the first image as the thumbnail image of the video.

According to yet another embodiment of the present disclosure, an electronic device includes one or more processors; a memory; and one or more programs stored in the memory and configured for execution by the one or more processors. The program includes instructions for detecting a plurality of images in a video, selecting at least one image by considering a color attribute of the images, and displaying the at least one image as a thumbnail image of the video.

According to still another embodiment of the present disclosure, an electronic device includes one or more processors; a memory; and one or more programs stored in the memory and configured for execution by the one or more processors. The program includes instructions for detecting a first image in a video, determining whether the first image is suitable for a thumbnail image by considering a color attribute of the first image, and displaying the first image as the thumbnail image of the video when the first image is suitable for the thumbnail image.

Other embodiments, advantages, and salient features of the disclosure may become apparent to those skilled in the art from the following detailed description, which, taken in conjunction with the annexed drawings, discloses exemplary embodiments of the disclosure.

Preferably, the device is one or more processors; a memory; and one or more programs stored in the memory and configured for execution by the one or more processors, wherein the program comprises instructions configured to cause the one or more processors to detect a plurality of images in a video, select at least one image by considering a color attribute of the images, and display the at least one image as a thumbnail image of the video.

Preferably, the device is wherein the instruction configured to cause the one or more processors to detect the images in the video further causes the one or more processors to detect the images from a reference point of the video at regular time intervals.

Preferably, the device is wherein the instruction configured to cause the one or more processors to detect the images in the video further causes the one or more processors to randomly detect the images in the video.

Preferably, the device is wherein the instruction configured to cause the one or more processors to select the image further causes the one or more processors to determine a brightness standard deviation of each image, and select at least one image by using the brightness standard deviation.

Preferably, the device is wherein the instruction configured to cause the one or more processors to select the image further causes the one or more processors to determine a color standard deviation of each image, and select at least one image by using the color standard deviation.

Preferably, the device is wherein the instruction configured to cause the one or more processors to select the image further causes the one or more processors to determine an average color of each image, and select at least one image by using a similarity between the average color and a reference color of each image.

Preferably, the device is wherein the instruction configured to cause the one or more processors to select the image further causes the one or more processors to calculate a composition rate of a reference color of each image, and selects at least one image by using the composition rate with respect to a particular color of each image.

Preferably, the device is one or more processors; a memory; and one or more programs stored in the memory and configured for execution by the one or more processors, wherein the program comprises instructions configured to cause the one or more processors to detect a first image in a video, determine whether the first image is suitable for a thumbnail image by using a color attribute of the first image, and display the first image as the thumbnail image of the video when the first image is suitable for the thumbnail image.

Preferably, the device is wherein the instruction configured to cause the one or more processors to determine whether the first image is suitable for the thumbnail image further causes the one or more processors to calculate a brightness standard deviation of the image, and determine whether the first image is suitable for the thumbnail image by using the brightness standard deviation and a reference standard deviation.

Preferably, the device is wherein the instruction configured to cause the one or more processors to determine whether the first image is suitable for the thumbnail image further causes the one or more processors to calculate a color standard deviation of the image, and determine whether the first image is suitable for the thumbnail image by using the color standard deviation and a reference standard deviation.

Preferably, the device is wherein the instruction configured to cause the one or more processors to determine whether the first image is suitable for the thumbnail image further causes the one or more processors to calculate an average color of the image, and determine whether the first image is suitable for the thumbnail image by using a similarity between the average color and a reference color.

Preferably, the device is wherein the instruction configured to cause the one or more processors to determine whether the first image is suitable for the thumbnail image further causes the one or more processors to calculate a composition rate of a reference color of the image, and determine whether the first image is suitable for the thumbnail image by using the composition rate with respect to a reference color of the image.

Preferably, the device further comprises a instructions configured to cause the one or more processors to, when the first image is not suitable for the thumbnail image, detect a second image in the video, determine whether the second image is suitable for the thumbnail image by using a color attribute of the second image, and display the second image as the thumbnail image of the video when the second image is suitable for the thumbnail image.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a block diagram of an electronic device according to an exemplary embodiment of the present disclosure;

FIG. 2 illustrates a detailed block diagram of a processor according to an exemplary embodiment of the present disclosure;

FIG. 3A illustrates a process and method for creating a thumbnail image of a video in the electronic device according to an exemplary embodiment of the present disclosure;

FIG. 3B illustrates a diagram of the electronic device for creating the video thumbnail image according to an exemplary embodiment of the present disclosure;

FIG. 4 illustrates a process and a method for creating the video thumbnail image using a standard deviation of an image brightness in the electronic device according to one exemplary embodiment of the present disclosure;

FIG. 5 illustrates a process and method for creating the video thumbnail image using the standard deviation of the image brightness in the electronic device according to another exemplary embodiment of the present disclosure;

FIG. 6 illustrates a process and method for creating the video thumbnail image using a standard deviation of an image color in the electronic device according to one exemplary embodiment of the present disclosure;

FIG. 7 illustrates a process and method for creating the video thumbnail image using the standard deviation of the image color in the electronic device according to another exemplary embodiment of the present disclosure;

FIG. 8 illustrates a process and method for creating the thumbnail image of the video with an image of an average color most similar to a particular color in the electronic device according to an exemplary embodiment of the present disclosure;

FIG. 9 illustrates a process and method for creating the thumbnail image of the video with an image of the highest composition rate for a particular color of the image in the electronic device according to an exemplary embodiment of the present disclosure; and

FIGS. 10A and 10B illustrate a screen displaying the thumbnail images of the videos in the electronic device.

Throughout the drawings, like reference numerals will be understood to refer to like parts, components and structures.

### DETAILED DESCRIPTION

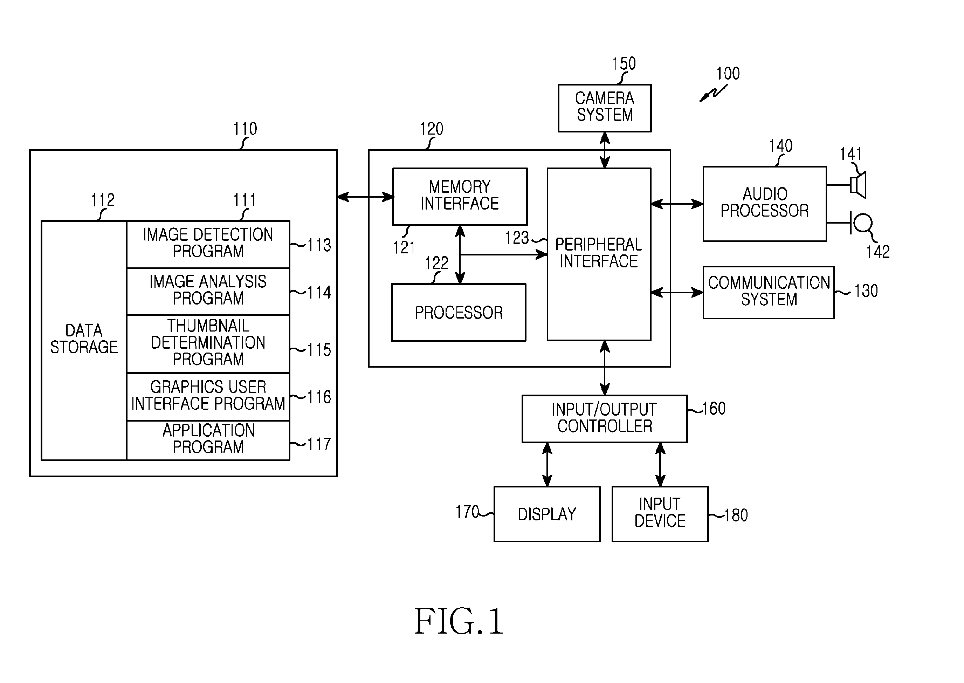

FIGURES 1 through 10B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device. The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are used to enable a clear and consistent understanding of the disclosure. Accordingly, it should be apparent to those skilled in the art that the following description of exemplary embodiments of the present disclosure are provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present disclosure provide a technique for creating a thumbnail image of a video in an electronic device.

Hereinafter, the electronic device encompasses a mobile communication terminal, a Personal Digital Assistant (PDA), a laptop, a smart phone, a netbook, a television, a Mobile Internet Device (MID), an Ultra Mobile Personal Computer (UMPC), a tablet PC, a navigation device, and an MP3 player.

FIG. 1 is a block diagram of an electronic device according to an exemplary embodiment of the present disclosure.

As shown in FIG. 1, the electronic device 100 includes a memory 110, a processor unit 120, a communication system 130, an audio processor 140, a camera system 150, and an input/output controller 160, a display 170, and an input device 180. Certain embodiments include a plurality of the memories 110.

The components are described below.

The memory 110 includes a program storage 111 for storing a program to control operations of the electronic device 100, and a data storage 112 for storing data generated in the program execution. For example, the program storage 111 includes an image detection program 113, an image analysis program 114, a thumbnail determination program 115, a graphics user interface program 116, and at least one application program 117. Herein, the program contained in the program storage 111 can be referred as an instruction set which is a set of instructions. For example, the data storage 112 stores video images detected by the image detection program 113. The data storage 112 stores a video thumbnail image generated by the thumbnail determination program 115.

The image detection program 113 includes at least one software component for detecting the image from the video. For example, the image detection program 113 detects at least one image at regular time intervals from a reference point of the video. For example, the image detection program 113 randomly detects at least one image from the video. The reference point includes the start of the video, the end of the video, and a point after a certain time from the start of the video.

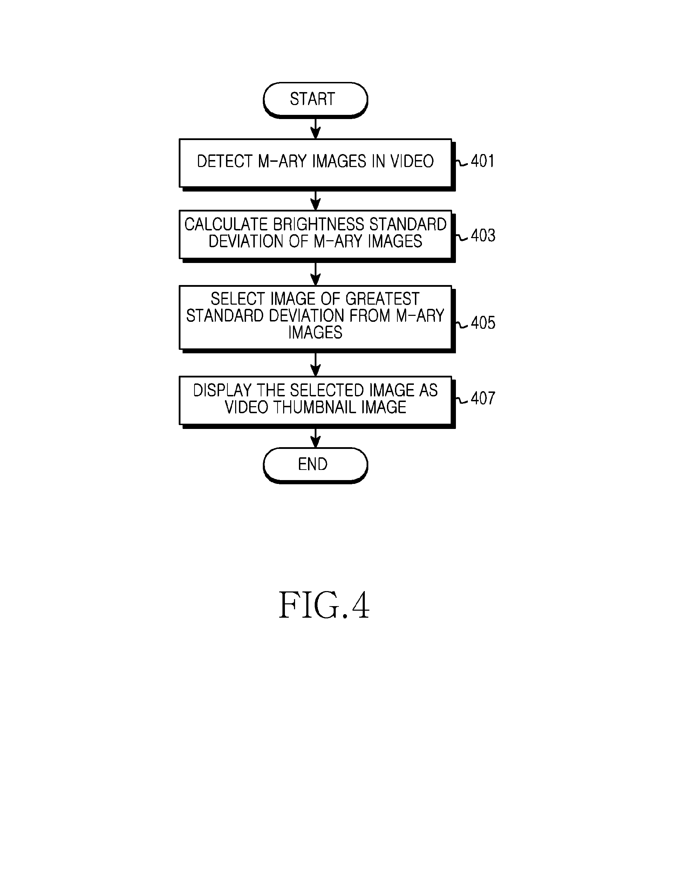

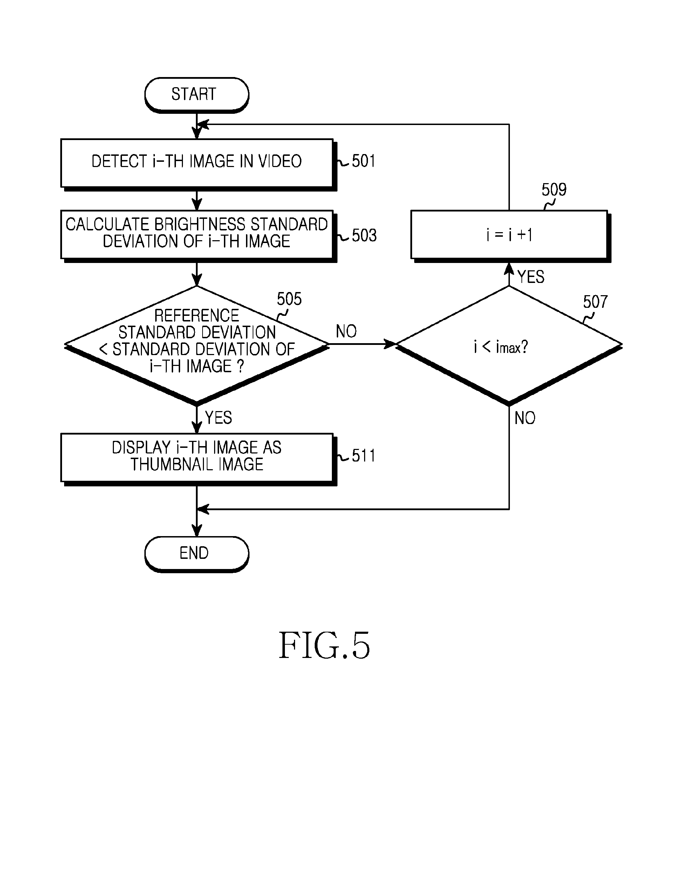

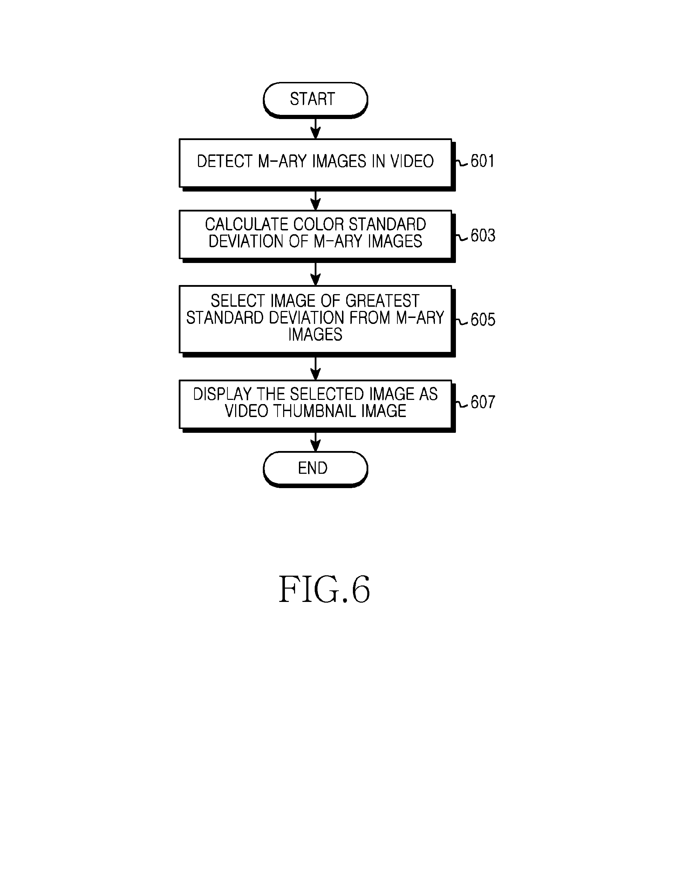

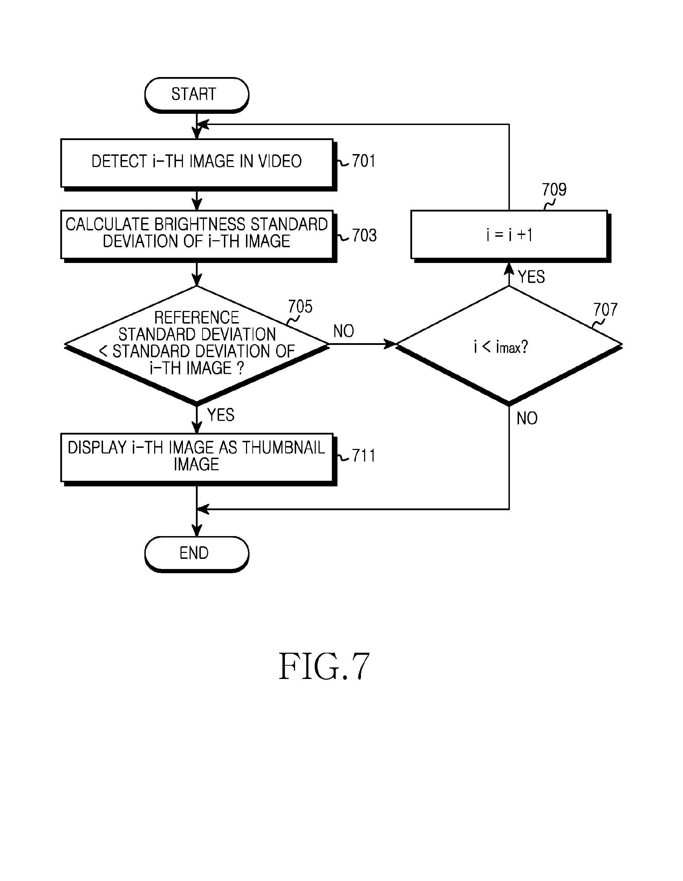

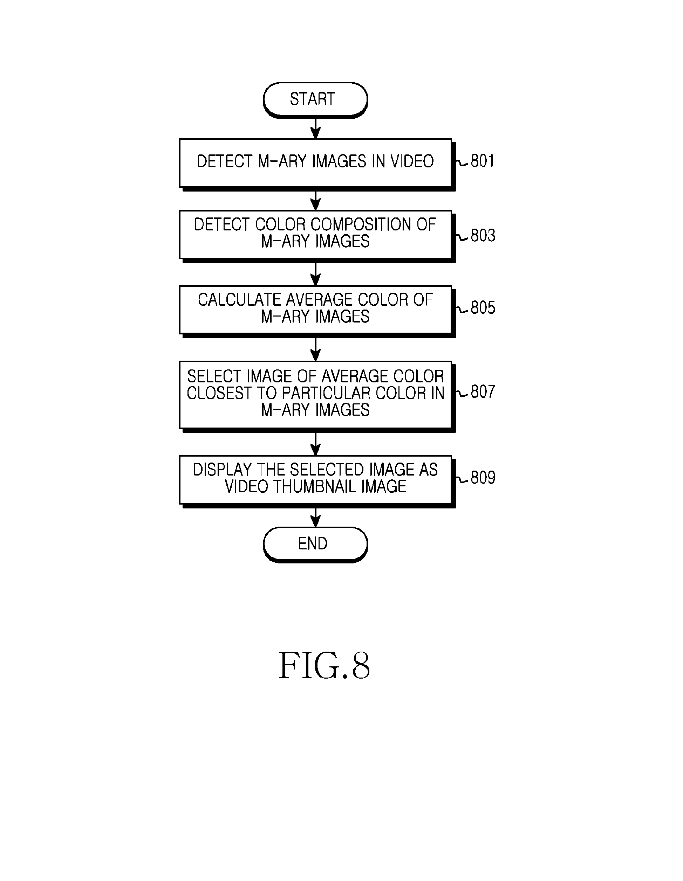

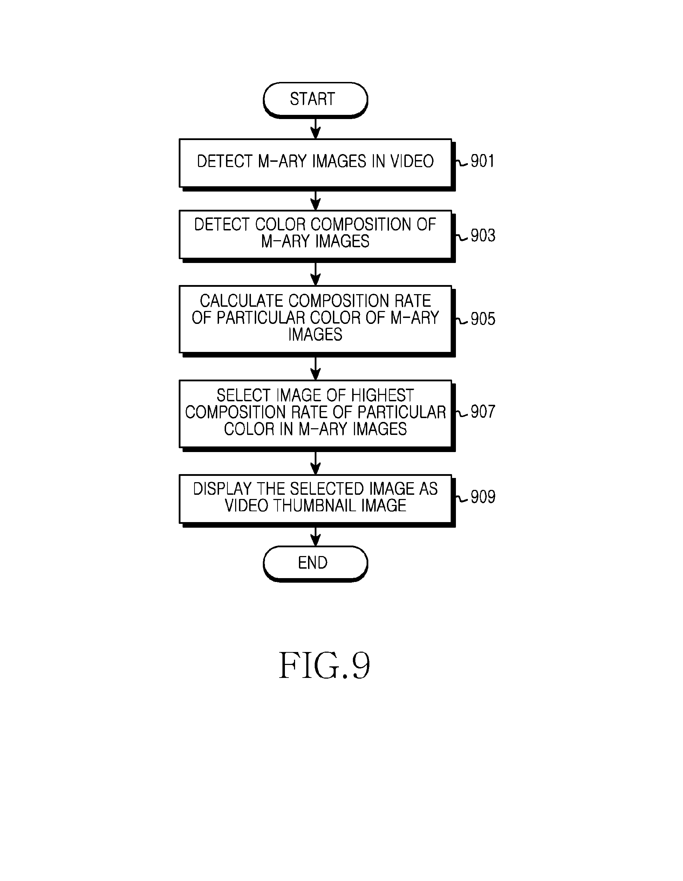

The image analysis program 114 includes at least one software component for analyzing a color attribute of the image detected by the image detection program 113. For example, the image analysis program 114 calculates a standard deviation of brightness of the image detected by the image detection program 113 as shown in FIGS. 4 and 5. For example, the image analysis program 114 calculates a standard deviation of color of the image detected by the image detection program 113 as shown in FIGS. 6 and 7. For example, the image analysis program 114 calculates a composition rate of an average color or a particular color by detecting color composition of the image detected by the image detection program 113 as shown in FIGS. 8 and 9.

The thumbnail determination program 115 includes at least one software component for determining the thumbnail image using analysis information of the color attribute of the image provided from the image analysis program 114. For example, the thumbnail determination program 115 determines any one of the images detected by the image detection program 113 as the thumbnail image by considering the brightness standard deviation of the image. For example, the thumbnail determination program 115 determines any one of the images detected by the image detection program 113 as the thumbnail image by considering the color standard deviation of the image. For example, the thumbnail determination program 115 determines any one of the images detected by the image detection program 113 as the thumbnail image by considering the average color of the image. For example, the thumbnail determination program 115 determines any one of the images detected by the image detection program 113 as the thumbnail image by considering the composition rate of the particular color of the image.

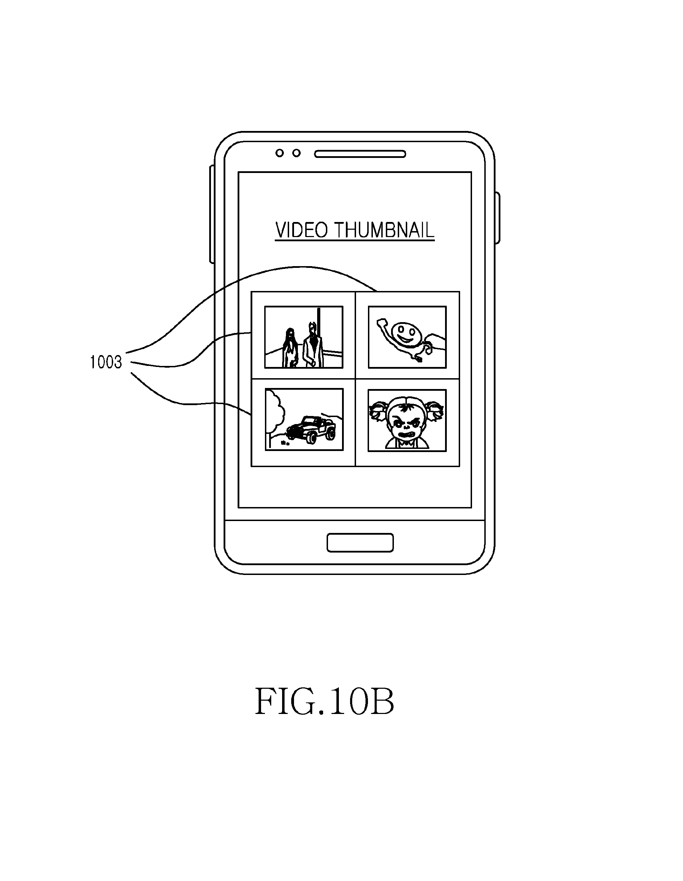

The graphics user interface program 116 includes a software component for displaying the thumbnail image of the video in the display 170. For example, the graphics user interface program 116 displays the images determined by the thumbnail determination program 115 as thumbnail images 1003 of the videos in the display 170 as shown in FIG. 10B.

The application program 117 includes a software component for at least one application program installed in the electronic device 100.

The processor unit 120 includes a memory interface 121, at least one processor 122, and a peripheral interface 123. The memory interface 121, the at least one processor 122, and the peripheral interface 123 of the processor unit 120 can be integrated onto at least one integrated circuit or implemented using separate components.

The memory interface 121 controls the access of a component such as processor 122 or peripheral interface 123, to the memory 110.

The peripheral interface 123 controls connections between input/output peripherals of the electronic device 100 and the processor 122 and the memory interface 121.

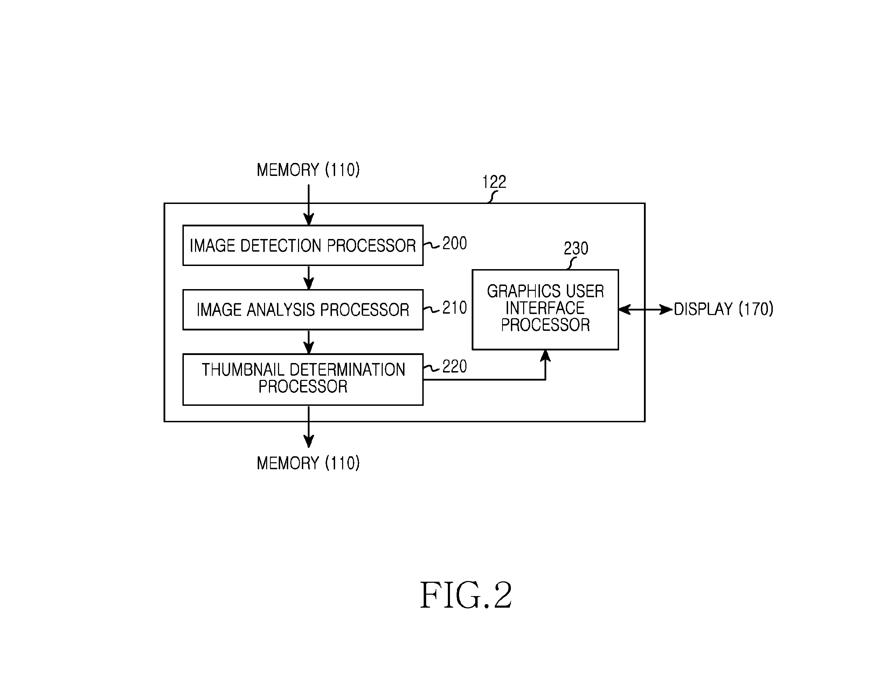

The processor 122 controls the electronic device 100 to provide various multimedia services using at least one software program. In so doing, the processor 122 executes at least one program stored in the memory 110 and to provide the service according to the corresponding program. For example, the processor 122 includes an image detection processor 200 for executing the image detection program 113, an image analysis processor 210 for executing the image analysis program 114, a thumbnail determination processor 220 for executing the thumbnail determination program 115, and a graphics user interface processor 230 for executing the graphics user interface program 116 as shown in FIG. 2.

The communication system 130 processes voice communication and data communication. In so doing, the communication system 130 can be divided into a plurality of communication submodules which support different communication networks. The communication networks can include, but are not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless Local Area Network (LAN), a Bluetooth network, and a Near Field Communication (NFC) network.

The audio processor 140 provides an audio interface between a user and the electronic device 100 through a speaker 141 and a microphone 142.

The camera system 150 captures moving picture data and still picture data.

The input/output controller 160 provides an interface between the input/output device such as display 170 and input device 180, and the peripheral interface 123.

The display 170 displays status information of the electronic device 100, a character input by the user, the moving picture, and the still picture.

The display 170 can include a touch screen. In this case, the display 170 provides touch information of the touch screen to the processor unit 120 through the input/output controller 160.

The input device 180 provides input data generated by a user's selection to the processor unit 120 through the input/output controller 160. In certain embodiments, the input device 180 includes only a control button to control the electronic device 100. For example, the input device 180 includes a keypad for receiving the input data from the user.

FIG. 2 is a detailed block diagram of the processor 122 according to an exemplary embodiment of the present disclosure.

As shown in FIG. 2, the processor 122 includes the image detection processor 200, the image analysis processor 210, the thumbnail determination processor 220, and the graphics user interface processor 230.

The image detection processor 200 detects the image in the video by running the image detection program 113 of the program storage 111. For example, the image detection processor 200 detects at least one image at regular time intervals from the reference point of the video. For example, the image detection processor 200 randomly detects at least one image in the video. Herein, the reference point includes the start of the video, the end of the video, and the point after the certain time from the start of the video.

The image analysis processor 210 includes at least one software component for analyzing the color attribute of the image detected by the image detection processor 200 by running the image analysis program 114 of the program storage 111. For example, the image analysis processor 210 calculates the standard deviation of the brightness of the image detected by the image detection processor 200 as shown in FIGS. 4 and 5. For example, the image analysis processor 210 calculates the color standard deviation of the image detected by the image detection processor 200 as shown in FIGS. 6 and 7. For example, the image analysis processor 210 calculates the composition rate of the average color or a particular color by detecting the color composition of the image detected by the image detection processor 200 as shown in FIGS. 8 and 9.

The thumbnail determination processor 220 includes at least one software component for determining the thumbnail image using the analysis information of the color attribute of the image provided from the image analysis processor 210 by running the thumbnail determination program 115 of the program storage 111. For example, the thumbnail determination processor 220 determines any one of the images detected by the image detection processor 200 as the thumbnail image by using the brightness standard deviation of the image. For example, the thumbnail determination processor 220 determines any one of the images detected by the image detection processor 200 as the thumbnail image by using the color standard deviation of the image. For example, the thumbnail determination processor 220 determines any one of the images detected by the image detection processor 200 as the thumbnail image by using the average color of the image. For example, the thumbnail determination processor 220 determines any one of the images detected by the image detection processor 200 as the thumbnail image by using the composition rate of the particular color of the image.

The graphics user interface processor 230 includes a software component for displaying the thumbnail image of the video in the display 17 by running the graphics user interface program 116 of the program storage 111. For example, the graphics user interface processor 230 displays the images determined by the thumbnail determination processor 220 as the thumbnail images 1003 of the videos in the display 170 as shown in FIG. 10B.

In this exemplary embodiment of the present disclosure, the electronic device 100 includes the image detection program 113, the image analysis program 114, the thumbnail determination program 115, and the graphics user interface program 116 for creating the thumbnail of the video in the program storage 111. Hence, the electronic device 100 controls the processor 122 of FIG. 2 to execute the programs in the program storage 111 and to provide a phonebook service including emotional information.

Alternatively, the electronic device 100 controls to provide the phonebook service including the emotional information using the processor 122 including the image detection program 113, the image analysis program 114, the thumbnail determination program 115, and the graphics user interface program 116. In detail, the processor 122 of FIG. 2 includes respective information of the image detection program 113, the image analysis program 114, the thumbnail determination program 115, and the graphics user interface program 116.

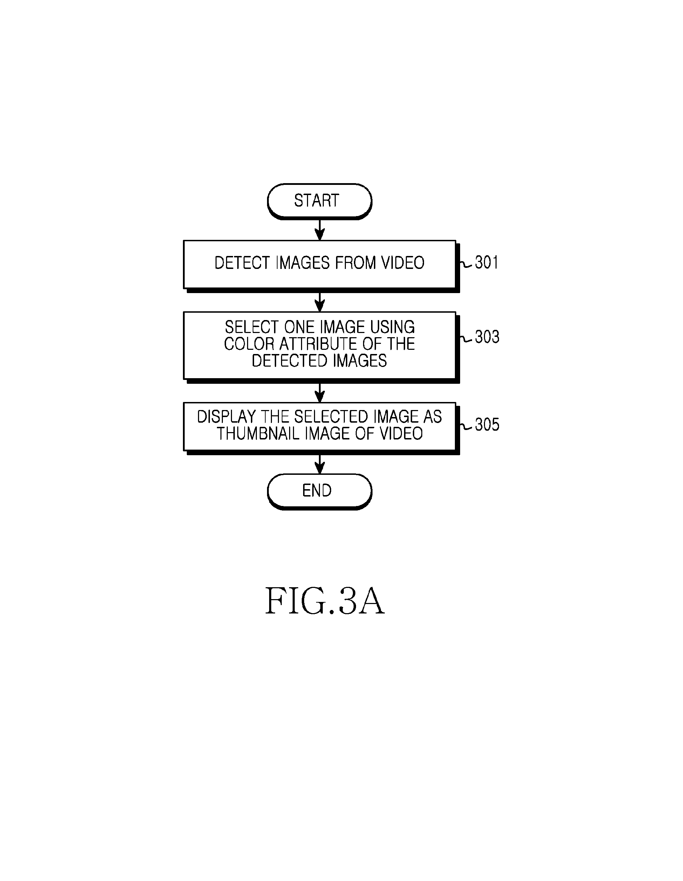

FIG. 3A is a flowchart of a method for creating the thumbnail image of the video in the electronic device according to an exemplary embodiment of the present disclosure.

Referring to FIG. 3A, the electronic device detects a plurality of images in the video in block 301. For example, the electronic device detects a certain number of images at regular time intervals from the reference point of the video. For example, the electronic device randomly detects a certain number of images from the video. The reference point includes the start point, the end point, and the point after a certain time from the start point.

In block 303, the electronic device selects one image using the color attribute of the images detected in block 301. For example, the electronic device selects the image of the greatest standard deviation using the brightness standard deviation of the images detected in block 301. For example, the electronic device selects the image of the greatest standard deviation using the color standard deviation of the images detected in block 301. For example, the electronic device detects the color composition of the images detected in block 301 and selects the image of an average color closest to a particular color using the average color. For example, the electronic device detects the color composition of the images detected in block 301 and selects the image of the highest composition rate of a particular color.

In block 305, the electronic device displays the image selected in block 303, as the thumbnail image of the video. For example, the electronic device displays the selected image as the thumbnail image 1003 of the video, from which the images are detected in block 301, in the display 170 as shown in FIG. 10B.

Next, the electronic device finishes this process.

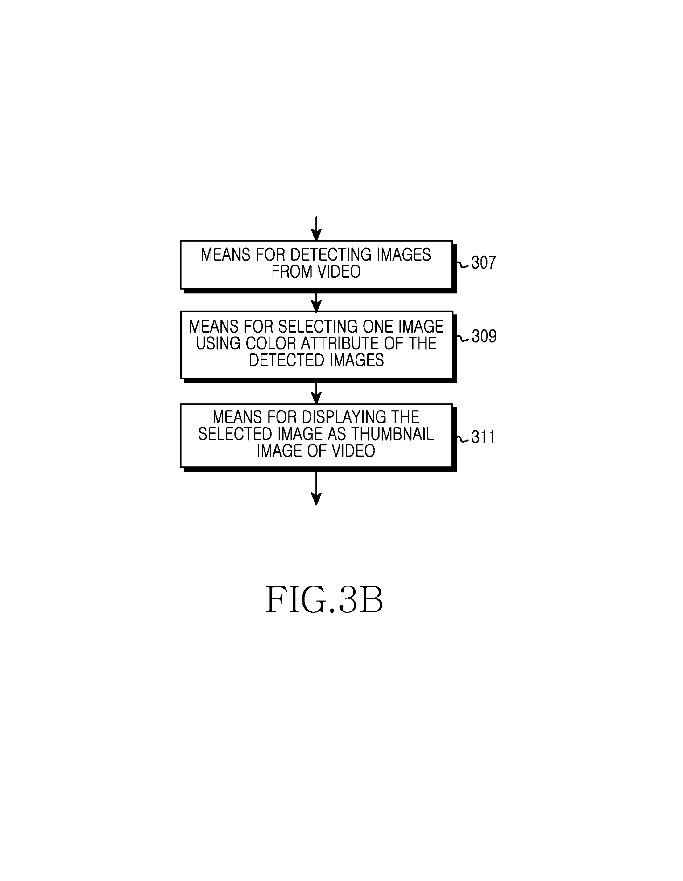

As above, the method for creating the video thumbnail image in the electronic device can include creating the video thumbnail images in the electronic device as shown in FIG. 3B.

FIG. 3B is a diagram of the electronic device for creating the video thumbnail image according to an exemplary embodiment of the present disclosure.

Referring to FIG. 3B, the electronic device includes a first means 307 for detecting the images in the video, a second means 309 for selecting one image using the color attribute of the images, and a third means 311 for displaying the selected image as the thumbnail image of the video.

The first means 307 detects the plurality of the images in the video. For example, the electronic device detects the certain number of images at regular time intervals from the reference point of the video. For example, the electronic device randomly detects the certain number of images from the video. The reference point includes the start of the video, the end of the video, and the point after the certain time from the start.

The second means 309 selects one image using the color attribute of the images detected by the first means 307. For example, the electronic device selects the image of the greatest standard deviation using the brightness standard deviation of the images detected by the first means 307. For example, the electronic device selects the image of the greatest standard deviation using the color standard deviation of the images detected by the first means 307. For example, the electronic device detects the color composition of the images detected by the first means 307 and selects the image of the average color closest to the particular color using the average color. For example, the electronic device detects the color composition of the images detected by the first means 307 and selects the image of the highest composition rate of a particular color.

The third means 311 displays the image selected by the second means 309, as the thumbnail image of the video. For example, the electronic device displays the selected images as the thumbnail image 1003 of the video, from which the images are detected by the first means 307, in the display 170 as shown in FIG. 10B.

As such, the electronic device includes the means for setting the thumbnail image of the video. In so doing, the electronic device includes the respective means for setting the thumbnail image of the video, as a single means.

FIG. 4 is a flowchart of a method for creating the video thumbnail images using the standard deviation of the image brightness in the electronic device according to one exemplary embodiment of the present disclosure.

Referring to FIG. 4, the electronic device detects m-ary images in the video in block 401. For example, the electronic device detects the m-ary images at regular time intervals from the reference point of the video. For example, the electronic device randomly detects the m-ary images from the video. The reference point includes the start point, the end point, and the point after a certain time from the start point of the video.

In block 403, the electronic device calculates the brightness standard deviation of the m-ary images detected in block 401. For example, the electronic device generates a brightness histogram including the number of pixels corresponding to the brightness value in each image detected in block 401. Next, the electronic device calculates the standard deviation based on the average brightness of the images using the brightness histogram. In so doing, the brightness value indicates the brightness level represented by one pixel of the image. For example, when one pixel represents the brightness using up to 8 bits, the brightness value includes 256 levels from the white color 0 to the black color 255.

In block 405, the electronic device selects the image of the greatest standard deviation among the m-ary images. When the standard deviation of the image brightness is considerable, the electronic device recognizes the uniform distribution of the image brightness. Accordingly, the electronic device recognizes that the image of the greatest standard deviation definitely presents features of the video, and consequently determines the image of the greatest standard deviation as the thumbnail image of the video.

In block 407, the electronic device displays the image selected in block 405, as the thumbnail image of the video. For example, the electronic device displays the image of the greatest standard deviation as the thumbnail image 1003 of the video, in which the images are detected in block 401, in the display 170 as shown in FIG. 10B.

Next, the electronic device finishes this process.

In this one exemplary embodiment of the present disclosure, the electronic device determines one of the images as the thumbnail image of the video by taking into account the brightness standard deviation.

According to certain embodiments of the present disclosure, the electronic device determines the thumbnail image of the video by using the brightness standard deviation and a reference standard deviation.

FIG. 5 is a flowchart of a method for creating the video thumbnail image using the standard deviation of the image brightness in the electronic device according to another exemplary embodiment of the present disclosure.

Referring to FIG. 5, the electronic device detects an i-th image from the video in block 501. For example, the electronic device detects the i-th image from the reference point of the video. For example, the electronic device randomly detects the image from the video. The reference point includes the start of the video, the end of the video, and the point after a certain time from the start. The term i, which is a positive number, has an initial value of 1.

In block 503, the electronic device calculates the brightness standard deviation of the i-th image detected in block 501. For example, the electronic device generates a brightness histogram including the number of pixels corresponding to the brightness value in the i-th image detected in block 501. Next, the electronic device calculates the standard deviation based on the average brightness of the images using the brightness histogram. In so doing, the brightness value indicates the brightness level represented by one pixel of the image. For example, when one pixel represents the brightness using up to 8 bits, the brightness value includes 256 levels from the white color 0 to the black color 255.

In block 505, the electronic device determines whether the standard deviation of the i-th image is greater than a reference standard deviation. The reference standard deviation can be preset or set by the user.

When the standard deviation of the i-th image is less than the reference standard deviation, the electronic device recognizes that the i-th image is not suitable for the video thumbnail image. Accordingly, the electronic device determines whether i is less than iₘₐₓ in block 507. The iₘₐₓ, which is used to avoid infinite loop of this process, can be preset or defined by the user. When i is not less than iₘₐₓ, the electronic device finishes this process. In so doing, the electronic device displays the image of the greatest standard deviation among the standard deviations calculated in block 503, as the thumbnail image of the video.

By contrast, when i is less than iₘₐₓ, the electronic device adds 1 to i in block 509. For example, when the electronic device initiates this process, the value i is initialized to 1. Accordingly, when 1 is added to the initial i, i becomes 2. Next, the electronic device detects the second image from the video in block 501.

When the standard deviation of the i-th image is greater than the reference standard deviation, the electronic device displays the i-th image as the thumbnail image of the video in block 511. For example, the electronic device displays the i-th image as the thumbnail image 1003 of the video detected in block 501, in the display 170.

Next, the electronic device finishes this process.

FIG. 6 is a flowchart of a method for creating the video thumbnail image using a standard deviation of an image color in the electronic device according to one exemplary embodiment of the present disclosure.

Referring to FIG. 6, the electronic device detects m-ary images from the video in block 601. For example, the electronic device detects the m-ary images at regular time intervals from the reference point of the video. For example, the electronic device randomly detects the m-ary images from the video. The reference point includes the start of the video, the end of the video, and the point after a certain time from the start. The term m denotes a positive number.

In block 603, the electronic device calculates the colors standard deviation of the m-ary images detected in block 601. For example, the electronic device generates a color histogram including the number of pixels corresponding to the color value in each image detected in block 601. Next, the electronic device calculates the standard deviation based on the average color of the images using the color histogram. In so doing, the color value indicates the number of colors represented by one pixel of the image. For example, when one pixel can represent the color up to 8 bits, the color value includes 256 levels.

In block 605, the electronic device selects the image of the greatest standard deviation among the m-ary images. When the standard deviation of the image brightness is used, the electronic device recognizes the uniform distribution of the image brightness. Accordingly, the electronic device recognizes that the image of the greatest standard deviation definitely presents features of the video, and consequently determines the image of the greatest standard deviation as the thumbnail image of the video.

In block 607, the electronic device displays the image selected in block 605, as the thumbnail image of the video. For example, the electronic device displays the image of the greatest standard deviation as the thumbnail image 1003 of the video, in which the image is detected in block 601, in the display 170.

Next, the electronic device finishes this process.

In this another exemplary embodiment of the present disclosure, the electronic device determines one of the images as the thumbnail image of the video by taking into account the color standard deviation.

Alternatively, the electronic device determines the thumbnail image of the video by using the color standard deviation and a reference standard deviation as shown in FIG. 7.

FIG. 7 illustrates a method for creating the thumbnail image of the video using the standard deviation of the image color in the electronic device according to another exemplary embodiment of the present disclosure.

Referring to FIG. 7, the electronic device detects an i-th image from the video in block 701. For example, the electronic device detects the i-th image from the reference point of the video. For example, the electronic device randomly detects the image from the video. The reference point includes the start of the video, the end of the video, and the point after a certain time from the start. i, which is the positive number, has the initial value of 1.

In block 703, the electronic device calculates the color standard deviation of the i-th image detected in block 701. For example, the electronic device generates the color histogram including the number of pixels corresponding to the color value in the i-th image detected in block 701. Next, the electronic device calculates the standard deviation based on the average color of the images using the color histogram. In so doing, the color value indicates the number of colors represented by one pixel of the image. For example, when one pixel represents the color using up to 8 bits, the color value includes 256 levels.

In block 705, the electronic device determines whether the standard deviation of the i-th image is greater than a reference standard deviation. The reference standard deviation can be preset or set by the user.

When the standard deviation of the i-th image is less than the reference standard deviation, the electronic device recognizes that the i-th image is not suitable for the thumbnail image. Accordingly, the electronic device determines whether i is less than iₘₐₓ in block 707. The iₘₐₓ, which is used to avoid infinite loop of this process, can be preset or set by the user. When i is not less than iₘₐₓ, the electronic device finishes this process. In so doing, the electronic device displays the image of the greatest standard deviation among the standard deviations calculated in block 703, as the thumbnail image of the video.

By contrast, when i is less than iₘₐₓ, the electronic device adds 1 to i in block 709. For example, when the electronic device initiates this process, the value i is initialized to 1. Accordingly, when 1 is added to the initial i, i becomes 2. Next, the electronic device detects the second image from the video in block 701.

When the standard deviation of the i-th image is greater than the reference standard deviation, the electronic device displays the i-th image as the thumbnail image of the video in block 711. For example, the electronic device displays the i-th image as the thumbnail images 1003 of the video detected in block 701, in the display 170.

Next, the electronic device finishes this process.

In this another exemplary embodiment of the present disclosure, the electronic device determines the thumbnail image of the video using the color standard deviation of the image.

Alternatively, the electronic device determines the image of the most similar color to a particular color, as the thumbnail image of the video as shown in FIG. 8.

FIG. 8 illustrates a method for creating the thumbnail image of the video with an image of an average color most similar to a particular color in the electronic device according to an exemplary embodiment of the present disclosure.

Referring to FIG. 8, the electronic device detects m-ary images from the video in block 801. For example, the electronic device detects the m-ary images at regular time intervals from the reference point of the video. For example, the electronic device randomly detects the m-ary images from the video. The reference point includes the start of the video, the end of the video, and the point after a certain time from the start of the video. The term m denotes a positive number.

In block 803, the electronic device detects the color composition of the m-ary images detected in block 801. That is, the electronic device analyzes colors of the images detected in block 801.

In block 805, the electronic device calculates an average color of the m-ary images respectively. In so doing, the electronic device calculates the average color by applying a weight according to the number of pixels corresponding to the color value of the image.

In block 807, the electronic device selects the image of the average color closest to a particular color among the m-ary images. The particular color can be preset or selected by the user.

In block 809, the electronic device displays the image selected in block 807, as the thumbnail image of the video. For example, the electronic device displays the image of the average color closest to the particular color, as the thumbnail image 1003 of the video of the image detected in block 801, in the display 170 as shown in FIG. 10B.

In this exemplary embodiment of the present disclosure, the electronic device sets the thumbnail image of the video using the average color of the image.

In certain embodiments, the electronic device sets the thumbnail image of the video using the composition rate of a particular color of the image as shown in FIG. 9.

FIG. 9 illustrates a method for creating the thumbnail image of the video with an image of the highest composition rate with respect to a particular color of the image in the electronic device according to an exemplary embodiment of the present disclosure.

Referring to FIG. 9, the electronic device detects m-ary images from the video in block 901. For example, the electronic device detects the m-ary images at regular time intervals from the reference point of the video. For example, the electronic device randomly detects the m-ary images from the video. The reference point includes the start of the video, the end of the video, and the point after a certain time from the start. The term m denotes the positive number.

In block 903, the electronic device detects the color composition of the m-ary images detected in block 901. That is, the electronic device analyzes colors of the images detected in block 901.

In block 905, the electronic device calculates the composition rate of a particular color of the m-ary images respectively. When the particular color is sky-blue, the electronic device calculates the percentage of the sky blue with respect to all of the colors of the image detected in block 901. The particular color can be preset or selected by the user.

In block 907, the electronic device selects the image of the highest composition rate of the particular color among the m-ary images.

In block 909, the electronic device displays the image selected in block 907, as the thumbnail image of the video. For example, the electronic device displays the image of the average color closest to the particular color, as the thumbnail image 1003 of the video of the image detected in block 901, in the display 170 as shown in FIG. 10B.

Next, the electronic device finishes this process.

In this exemplary embodiment of the present disclosure, the electronic device selects one of the images detected from the video, as the video thumbnail image using the color attribute. In so doing, the electronic device sets at least one image to the thumbnail image of the video.

Alternatively, the electronic device sets the thumbnail image of the video using an image recognition method such as face recognition and log recognition of the video.

As set forth above, as the electronic device sets the thumbnail image of the video using the color attribute, the thumbnail being the feature of the video can be set so that the user of the electronic device can easily identify the videos.

It will be appreciated that embodiments of the present disclosure according to the claims and description in the specification can be realized in the form of hardware, software or a combination of hardware and software.

Any such software can be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software can be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing apparatus or a method as claimed in any one of the claims of this specification and a machine-readable storage storing such a program. Still further, such programs can be conveyed electronically via any medium such as a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the spirit and scope of the disclosure as defined by the appended claims and their equivalents.

## Claims

1. A method for operating in an electronic device, the method comprising:
detecting a plurality of images in a video;
selecting at least one image by considering a color attribute of the images; and
displaying the at least one image as a thumbnail image of the video.

2. The method of claim 1, wherein the detecting of the images in the video comprises:
detecting the images from a reference point of the video at regular time intervals.

3. The method of claim 1, wherein the detecting of the images in the video comprises:
randomly detecting the images in the video.

4. The method of claim 1, wherein the selecting of the image comprises:
determining a brightness standard deviation of each image; and
selecting at least one image by using the brightness standard deviation.

5. The method of claim 1, wherein the selecting of the image comprises:
determining a color standard deviation of each image; and
selecting at least one image by using the color standard deviation.

6. The method of claim 1, wherein the selecting of the image comprises:
determining an average color of each image; and
selecting at least one image by using a similarity between the average color and a reference color of each image.

7. The method of claim 1, wherein the selecting of the image comprises:
determining a composition rate of a reference color of each image; and
selecting at least one image by using the composition rate with respect to a particular color of each image.

8. A method for creating a thumbnail image of a video, the method comprising:
detecting a first image in a video;
determining whether the first image is suitable for a thumbnail image by using a color attribute of the first image; and
when the first image is suitable for the thumbnail image, displaying the first image as the thumbnail image of the video.

9. The method of claim 8, wherein the determining of whether the first image is suitable for the thumbnail image comprises:
determining a brightness standard deviation of the image; and
determining whether the first image is suitable for the thumbnail image by using the brightness standard deviation and a reference standard deviation.

10. The method of claim 8, wherein the determining of whether the first image is suitable for the thumbnail image comprises:
determining a color standard deviation of the image; and
determining whether the first image is suitable for the thumbnail image by using the color standard deviation and a reference standard deviation.

11. The method of claim 8, wherein the determining of whether the first image is suitable for the thumbnail image comprises:
determining an average color of the image; and
determining whether the first image is suitable for the thumbnail image by using a similarity between the average color and a reference color.

12. The method of claim 8, wherein the determining of whether the first image is suitable for the thumbnail image comprises:
calculating a composition rate of a reference color of the image; and
determining whether the first image is suitable for the thumbnail image by using the composition rate with respect to a reference color of the image.

13. The method of claim 8, further comprising:
when the first image is not suitable for the thumbnail image, detecting a second image in the video;
determining whether the second image is suitable for the thumbnail image by using a color attribute of the second image; and
when the second image is suitable for the thumbnail image, displaying the second image as the thumbnail image of the video.

14. An electronic device comprising a processor unit to perform the method of any one of claims 1 to 13.

15. A computer program comprising computer program code means adapted to perform all the steps of any one of the method claims 1 to 13 when the computer program is run on a processor.
